# EUROPÄISCHE PATENTANMELDUNG

(11) **EP 4 847 116 A1**
(43) Veröffentlichungstag der Anmeldung: **02.12.2026**
(21) Anmeldenummer: 25178731.3
(22) Anmeldetag: 26.05.2025
(51) Int. Cl.: B01D 53/62, B01D 53/81, B01D 53/96, C01F 11/06, C01F 11/18

(54) **VERFAHREN ZUR CO2-ABTRENNUNG AUS EINEM CO2-ENTHALTENDEN PROZESSGAS**

(71) Anmelder: ThyssenKrupp Steel Europe AG, 47166 Duisburg (DE)
(72) Erfinder: López Freixes, Dr. Martí, 47166 Duisburg (DE); Suer, Julian, 47166 Duisburg (DE); Jäger, Dr. Nils, 47166 Duisburg (DE); Kohnen, Dr. Boris, 47166 Duisburg (DE)
(74) Vertreter: ThyssenKrupp Steel Europe AG

(57) **Zusammenfassung**

Die Erfindung betrifft ein Verfahren zur CO₂-Abtrennung aus einem CO₂-enthaltenden Prozessgas, wobei das CO₂-enthaltende Prozessgas mindestens einer Ofenkammer enthaltend MO zugeführt wird, in welcher der CO₂-Anteil im Prozessgas zumindest teilweise mit MO zu MCO₃ reagiert, somit ein Schritt des Karbonatisierens durchgeführt wird, so dass das Prozessgas mit einem Anteil von maximal 10 Vol.-% CO₂ aus der mindestens einen Ofenkammer abgeführt werden kann, wobei nach dem Abführen des Prozessgases aus der mindestens einen Ofenkammer dem MCO₃ Wärme zugeführt wird, so dass sich MCO₃ zu MO zersetzt und CO₂ freigesetzt wird, somit ein Schritt des Kalzinierens durchgeführt wird, wobei das CO₂ aus der mindestens einen Ofenkammer abgeführt werden kann, wobei das in der mindestens einen Ofenkammer verbleibende MO erneut mit einem CO₂-enthaltenden Prozessgas zur CO₂-Abtrennung beaufschlagt werden kann.

## Beschreibung

Die Erfindung betrifft ein Verfahren zur CO₂-Abtrennung aus einem CO₂-enthaltenden Prozessgas.

Kalzinieren ist ein industrieller und bekannter Prozess, bei welchem Kalkstein beziehungsweise Calciumcarbonat (CaCO₃) durch Erhitzen umgewandelt wird. Dabei wird Kalkstein im Zuge einer Materialvorbereitung gereinigt und zerkleinert, um eine gleichmäßige Erhitzung zu gewährleisten. Die Erhitzung findet in einem Ofen oder Reaktor auf sehr hohe Temperaturen statt, typischerweise zwischen 900 und 1600 °C. Diese Temperatur ist notwendig, um die physikalischen und chemischen Eigenschaften des Kalksteins zu verändern. Während des Erhitzens findet eine endotherme Reaktion statt, bei der Kalkstein Wärmeenergie aufnimmt, dabei flüchtige Substanzen entfernt werden und der Kalkstein in eine kalkähnliche Substanz umgewandelt wird. Der Kalkstein verliert gebundenes Wasser und Kohlenstoffdioxid wird freigesetzt. Dies führt im Wesentlichen zur Bildung von Branntkalk respektive Calciumoxid (CaO). Nach der Reaktion wird der Branntkalk als kalziniertes Material abgekühlt und für die weitere Verwendung oder Lagerung vorbereitet. Alternativ kann auch Dolomit beziehungsweise Magnesit (MgCO₃) zur Anwendung kommen. Die Erhitzung dabei kann typischerweise zwischen 700 und 1300 °C erfolgen. Wirkprinzip ist ähnlich wie die bei Kalkstein.

Das während des Kalzinierens freigesetzte CO₂ wird in einem separaten Prozessschritt abgeschieden und kann für verschiedene industrielle Anwendungen genutzt werden. Beispielsweise kann das abgeschiedene CO₂ in der Lebensmittel- und Getränkeindustrie, in der chemischen Industrie oder für die Herstellung von synthetischen Kraftstoffen verwendet werden. Durch die Nutzung des abgeschiedenen CO₂ wird nicht nur die Umweltbelastung reduziert, sondern auch ein wertvoller Rohstoff gewonnen. Dies kann als sogenanntes CCU (carbon capture usage) verzeichnet werden. Alternativ kann auch sogenanntes CCS (carbon capture storage) zur Anwendung kommen.

Des Weiteren sind auch Verfahren zur Abscheidung von Kohlenstoffdioxid aus Abgasen unter Verwendung von Calciumoxid bekannt. Diese Verfahren zielen darauf ab, die Kohlenstoffdioxid-Emissionen zu reduzieren und gleichzeitig das abgeschiedene Kohlenstoffdioxid für weitere industrielle Anwendungen nutzbar zu machen. Das Verfahren beginnt mit der Zufuhr von Abgasen in eine Reaktionskammer, die Kohlenstoffdioxid enthalten. In dieser Reaktionskammer befindet sich Calciumoxid, welches als Adsorptionsmittel für Kohlenstoffdioxid dient. Bei Kontakt mit dem Abgas reagiert Calciumoxid mit dem Kohlenstoffdioxid zu Calciumcarbonat, auch Karbonatisieren genannt. Diese Reaktion ist exotherm und führt zur Bildung eines festen Produkts, das leicht aus dem Gasstrom entfernt werden kann.

Aufgabe der Erfindung war es, ein Verfahren zur CO₂-Abtrennung aus einem CO₂-enthaltenden Prozessgas bereitzustellen, bei welchem einfachere und nachhaltige Prozessschritte im Vergleich zum bekannten Stand der Technik sichergestellt werden können.

Diese Aufgabe wird gelöst durch ein Verfahren mit den Merkmalen des Anspruchs 1. Weiterführende Ausgestaltungen sind in den Unteransprüchen beschrieben.

Die Lehre der Erfindung betrifft ein Verfahren zur CO₂-Abtrennung aus einem CO₂-enthaltenden Prozessgas, wobei das CO₂-enthaltende Prozessgas mindestens einer Ofenkammer enthaltend MO zugeführt wird, in welchem der CO₂-Anteil im Prozessgas zumindest teilweise mit MO zu MCO₃ reagiert, somit ein Schritt des Karbonatisierens durchgeführt wird, so dass das Prozessgas mit einem Anteil von maximal 10 Vol.-% CO₂ aus der mindestens einen Ofenkammer abgeführt werden kann. Erfindungswesentlich ist, dass nach dem Abführen des Prozessgases aus der mindestens einen Ofenkammer dem MCO₃ Wärme zugeführt wird, so dass sich MCO₃ zu MO zersetzt und CO₂ freigesetzt wird, somit ein Schritt des Kalzinierens durchgeführt wird, wobei das CO₂ aus der mindestens einen Ofenkammer abgeführt werden kann, wobei das in der mindestens einen Ofenkammer verbleibende MO erneut mit einem CO₂-enthaltenden Prozessgas zur CO₂-Abtrennung beaufschlagt werden kann respektive wird.

Die vorliegende Erfindung bietet mehrere Vorteile. Sie ermöglicht eine effiziente Abscheidung von CO₂ aus CO₂-enthaltenden Prozessgasen, was zur Reduktion der Treibhausgasemissionen beiträgt. Des Weiteren kann das abgeschiedene CO₂ wirtschaftlich genutzt werden. In vorteilhafter Weise wird der Branntkalk in einem geschlossenen Kreislauf wiederverwendet, was die Betriebskosten senkt und die Ressourceneffizienz erhöht. Im Allgemeinen können somit auch einfachere und nachhaltige Prozessschritte im Vergleich zum bekannten Stand der Technik sichergestellt werden.

M in MO respektive in MCO₃ steht entweder für Ca oder Mg oder enthaltend eine Mischung aus Ca und Mg. Mithin kann somit CaO oder MgO oder sogar eine Mischung aus MgO und CaO in der mindestens einen Ofenkammer enthalten sein. Die Umwandlung erfolgt dann zu MCO₃, somit zu CaCO₃ oder MgCO₃, oder, falls eine Mischung vorliegt, zu MgCO₃ und CaCO₃.

Die dem MCO₃ zugeführte Wärme kann aus einer Verbrennung eines Brenngases mit einem sauerstoffhaltigen Gas, vorzugsweise Luft, erzeugt werden, wobei gemäß einer Ausgestaltung das während der Verbrennung entstehende Verbrennungsgas als CO₂-enthaltendes Prozessgas verwendet wird. Dabei kann ein Brenngas zur Anwendung kommen, welches vorzugsweise ein Kuppelgas ist und aus einem integrierten Hüttenwerk entstammen kann, wie zum Beispiel ein Konvertergas, Hochofengas, Elektroofengas oder dergleichen.

Die Zusammensetzung des Brenngases kann je nach Bezug/Herkunft variieren. Im Falle der Verwendung eines Kuppelgases kann dies beispielhaft wie folgt aussehen:
- Hochofengas: Stickstoff von etwa 40 bis 60 Vol.-%, Kohlenstoffdioxid von ca. 20 bis 25 Vol.-%, Kohlenstoffmonoxid von etwa 20 bis 30 Vol.-% und Wasserstoff von ca. 2 bis 4 Vol.-%, Methan 0 bis 4 Vol.-% und CxHy Komponenten bis zu 3 Vol.-% sowie unvermeidbare Verunreinigungen;
- Konvertergas: Stickstoff von etwa 5 bis 25 Vol.-%, Kohlenstoffdioxid von ca. 15 bis 30 Vol.-%, Kohlenstoffmonoxid von etwa 50 bis 80 Vol.-% und Wasserstoff von ca. 2 bis 4 Vol.-% sowie unvermeidbare Verunreinigungen;
- Elektroofen: in einem EAF-Gas sind im Wesentlichen Anteile von Kohlenstoffdioxid mit ca. 50 bis 90 Vol.-%, Stickstoff mit etwa 5 bis 30 Vol.-% und Wasserdampf mit ca. 10 bis 20 Vol.-% enthalten; in einem SAF-Gas sind im Wesentlichen Anteile von Kohlenstoffdioxid, Kohlenstoffmonoxid und Wasserstoff, wobei insbesondere in Abhängigkeit von einem möglichen eingesetzten Kohlenstoffträger die Anteile wie folgt aussehen können, bei nassem Kohlenstoffträger mit einem Feuchtegehalt über 2 Gew.-%: Stickstoff von etwa 1 bis 15 Vol.-%, Kohlenstoffdioxid bis ca. 10 Vol.-%, Kohlenstoffmonoxid von etwa 20 bis 50 Vol.-%, Wasserstoff zwischen 30 und 50 Vol.-% und Wasserdampf von ca. 10 bis 30 Vol.-% sowie unvermeidbare Verunreinigungen; und bei trockenem Kohlenstoffträger mit einem Feuchtegehalt kleiner oder gleich 2 Gew.-%: Stickstoff von etwa 1 bis 15 Vol.-%, Kohlenstoffdioxid von ca. 5 bis 15 Vol.-%, Kohlenstoffmonoxid von etwa 40 bis 70 Vol.-%, Wasserstoff zwischen 5 und 30 Vol.-% und Wasserdampf von ca. 5 bis 15 Vol.-% sowie unvermeidbare Verunreinigungen.

Die Verbrennung zur Erzeugung von Wärme für MCO₃ kann für eine Dauer zwischen 2 und 120 min durchgeführt werden. Zum Erreichen der erforderlichen Temperatur zwischen 900 und 1600 °C im MCO₃ und insbesondere in Abhängigkeit von der Größe der Ofenkammer respektive des Volumens des zu erhitzenden MCO₃ und/oder von der Leistung respektive der Anzahl der Brenner kann die Dauer insbesondere mindestens 5, 7 min, vorzugsweise mindestens 10, 15 min, bevorzugt mindestens 19, 22 min betragen. Die Dauer kann insbesondere auf maximal 110 min, vorzugsweise auf maximal 100 min, auf maximal 90 min beschränkt sein.

Die Zusammensetzung eines Verbrennungsgases hängt auch im Wesentlichen von der Luftzahl λ ab, die das Verhältnis von tatsächlich zugeführter Luft zur theoretisch benötigten Luft für die vollständige Verbrennung darstellt. Allgemeine Auswirkungen der Luftzahl auf die Verbrennungsgaszusammensetzung sind:
Luftzahl λ < 1 (Unterstöchiometrische Verbrennung)
   Bei einer Luftzahl kleiner als 1 ist die zugeführte Luftmenge geringer als die theoretisch benötigte Menge. Dies führt zu einer unvollständigen Verbrennung, bei der Kohlenmonoxid (CO) und Wasserstoff (H₂) in höheren Konzentrationen im Abgas verbleiben. Typische Zusammensetzung: CO -> erhöhte Konzentration; H₂ -> erhöhte Konzentration; CO₂ -> reduzierte Konzentration; N₂ -> bleibt relativ konstant.
Luftzahl λ = 1 (stöchiometrische Verbrennung)
   Bei einer Luftzahl von 1 entspricht die zugeführte Luftmenge genau der theoretisch benötigten Menge für die vollständige Verbrennung. Dies führt zu einer optimalen Verbrennung, bei der Kohlenmonoxid (CO) und Wasserstoff (H₂) nahezu vollständig zu Kohlendioxid (CO₂) und Wasser (H₂O) oxidiert werden. Typische Zusammensetzung: CO -> sehr geringe Konzentration; H₂ -> sehr geringe Konzentration; CO₂ -> maximale Konzentration; N₂ -> bleibt relativ konstant.
Luftzahl λ > 1 (Überstöchiometrische Verbrennung)
   Bei einer Luftzahl größer als 1 ist die zugeführte Luftmenge höher als die theoretisch benötigte Menge. Dies führt zu einer vollständigen Verbrennung und einem Überschuss an Sauerstoff im Abgas. Typische Zusammensetzung: CO -> sehr geringe Konzentration; H₂ -> sehr geringe Konzentration; CO₂ -> reduzierte Konzentration (wegen Verdünnung durch überschüssigen Sauerstoff); N₂ -> bleibt relativ konstant; O₂ -> erhöhte Konzentration.

Mithin kann gemäß einer bevorzugten Ausführung die Verbrennung mit einer Luftzahl nahe 1, somit zwischen 0,98 und 1,02 durchgeführt werden, bevorzugt zwischen 0,99 und 1,01, besonders bevorzugt 1,0, um im Verbrennungsgas eine höchstmögliche Konzentration von Kohlenstoffdioxid zu erzeugen. Das so erzeugte Verbrennungsgas kann weiter bevorzugt als CO₂-enthaltendes Prozessgas verwendet werden.

Das CO₂-enthaltende Prozessgas wird gemäß einer Ausgestaltung in der Ofenkammer auf eine Temperatur zwischen 400 und 900 °C eingestellt. Die Temperatur kann insbesondere mindestens 450 °C, 500 °C, vorzugsweise mindestens 550 °C, 600 °C betragen. In dem eingestellten Temperaturintervall beziehungsweise bei der entsprechenden Temperatur steigen die Reaktionsrate, die Porendiffusion und die Oberflächendiffusion, so dass sich für das Karbonatisieren günstige Verhältnisse in der Ofenkammer ergeben. Mit anderen Worten findet das Karbonatisieren bei einer Temperatur zwischen 400 und 900 °C statt.

Um das Karbonatisieren zu begünstigen, vorzugsweise die MO-Umwandlung zu verbessern, kann gemäß einer Ausgestaltung Wasserdampf gesondert in die Ofenkammer oder zusammen als Mischung mit dem CO₂-enthaltenden Prozessgas zugegeben werden. Der Wasserdampf kann einen Anteil zwischen 5 bis 30 Vol.-% bezogen auf die Summe des in eine Ofenkammer eingebrachte CO₂-enthaltende Prozessgas und Wasserdampf aufweisen, insbesondere mindestens 7,8 Vol.-%, vorzugsweise mindestens 10,12 Vol.-%.

Messgerät/-verfahren zum Messen von Temperaturen an/in Feststoffen sowie in Gasen sind bekannt, beispielsweise die Anwendung von Thermoelementen oder Temperatursensoren.

Eine Kokerei ist eine industrielle Anlage zur Verkokung von Steinkohle, bei der Koks, ein fester Brennstoff, sowie verschiedene Nebenprodukte wie Teer, Ammoniak und Gase gewonnen werden. Die Ausrüstung einer Kokerei ist umfangreich und umfasst verschiedene technische Einrichtungen. Die Koksofenbatterien beziehungsweise Ofenkammern sind nebeneinander angeordnet zur Verkokung der Kohle inklusive Verbrennungstechnik zur Erzeugung der erforderlichen Wärme. Zur Lagerung und Transport der Rohkohle zu den Öfen sind Bunker und Förderanlagen vorhanden. Zur Aufbereitung und Homogenisierung der Kohle vor dem Verkokungsprozess sind Kohlemahl- und Mischanlagen installiert. Über Beschickungseinrichtungen werden die gemischte Kohle in die Ofenkammern eingefüllt. Zum Entleeren der Ofenkammern nach dem Verkokungsprozess dient eine Ausdrückmaschine. Zum Transport und Abkühlen des heißen Koks (mit Wasser oder Luft) stehen Kokswagen und Koksabschreckanlagen zur Verfügung. Zur Zerkleinerung und Klassifizierung des Koks nach Korngröße dienen Koksbrecher und Siebanlagen. Des Weiteren stehen Anlagen zur Reinigung und Verarbeitung der entstehenden Gase bereit, wie zum Beispiel Gaswäscher, Teerabscheider, Ammoniakrückgewinnung, Schwefelrückgewinnung und Gasspeicher und Gasverteilungssysteme. Filter, Entstaubungsanlagen, Rauchgasentschwefelung dienen Abgasreinigung und Umwelttechnik. Weiter zu nennen sind Steuerungs- und Überwachungssysteme inklusive der Prozessleittechnik zur Überwachung und Steuerung der gesamten Anlage.

Mit dem Zurückfahren sukzessive Abschalten von Hochöfen aufgrund der weltweit geforderten Dekarbonisierung in der Stahlindustrie werden auch bestehende Kokereien sukzessive zurückgefahren bis hin zur Stilllegung. Die bestehenden oder stillgelegten Kokereien können mit relativ wenig Aufwand ein Retrofit erfahren und für die Erfindung zweckentfremdet werden.

Somit eignet sich eine bestehende respektive ehemalige Kokerei umfassend mehrere Ofenkammern hervorragend zur CO₂-Abtrennung aus einem CO₂-enthaltenden Prozessgas. Somit wird gemäß einer bevorzugten Ausgestaltung die Erfindung in einer Kokerei umfassend mehrere Ofenkammern durchgeführt.

Die Ofenkammern werden über die Beschickungssysteme mit Kalkstein gefüllt. Ein Teil der Ofenkammern, beispielsweise die Hälfte der vorhandenen Ofenkammern, oder falls Ofenkammern als Ersatz beziehungsweise zur Wartung dienen, womit weniger als die Hälfte der vorhandenen Ofenkammern erhitzt werden, mithin MCO₃ Wärme zugeführt wird, wobei MCO₃ auf 700 bis 1600 °C erwärmt respektive erhitzt wird, so dass sich MCO₃ zu MO zersetzt und CO₂ freigesetzt wird, bei MgCO₃ beispielsweise 700 bis 1300 °C und bei CaCO₃ beispielsweise 900 bis 1600 °C. Dies entspricht einem Schritt des Kalzinierens. Das freigesetzte CO₂ wird aus den Ofenkammern abgeführt und beispielsweise einem Gasspeicher oder gegebenenfalls über Transportleitungen einer entsprechenden Verwendung zugeführt. Zeitgleich wird den anderen Ofenkammern ein CO₂-enthaltendes Prozessgas enthaltend MO zugeführt, in welchen der CO₂-Anteil im Prozessgas zumindest teilweise mit MO zu MCO₃ reagiert. Dies entspricht einem Schritt des Karbonisierens. Das Prozessgas wird mit einem Anteil von maximal 10 Vol.-%, insbesondere maximal 9, 8, 7 Vol.-%, vorzugsweise maximal 6, 5, 4 Vol.-% CO₂ aus den Ofenkammern abgeführt, wobei dieses beispielsweise einer weiteren Verwertung zugeführt werden kann oder auch schadstofffrei an die Atmosphäre abgegeben werden kann. Damit steht gemäß einer bevorzugten Ausgestaltung ein alternierendes System enthaltend gleichzeitig die Schritte des Kalzinierens sowie des Karbonatisierens bereit.

Entgegen des ursprünglichen Ansatzes der Verkokung von Rohkohle und einem Ausdrücken nach Beendung der Verkokung, kann insbesondere unabhängig davon, ob die Schritte des Kalzinierens sowie des Karbonatisierens in einer Kokerei stattfinden oder nicht, MO respektive MCO₃ des Öfteren umwandeln, so dass gemäß einer besonders bevorzugten Ausgestaltung die Schritte des Kalzinierens sowie des Karbonatisierens in mindestens einer Ofenkammer mindestens 10 mal durchgeführt werden, insbesondere mindestens 12, 14 mal, vorzugsweise mindestens 17, 20 mal. Mit zunehmenden Zyklen wird der Kalkstein pulverförmig und verliert an Reaktivität, so dass beispielsweise die Schritte des Kalzinierens sowie des Karbonatisierens in mindestens einer Ofenkammer auf maximal 40 Mal begrenzt werden können, bei Bedarf auch weniger.

Beispielhaft könnte das CO₂-enthaltenden Prozessgas in Serie durch mindestens zwei Ofenkammern geleitet werden, wobei in der ersten Ofenkammer der Großteil des CO₂ an MO gebunden wird, mithin CO₂ grob reduziert wird, beispielsweise > 50 bis 80 %, und in der zweiten Ofenkammer beispielsweise auf < 2 Vol.-% reduziert wird, mithin CO₂ fein reduziert wird.

Eine weitere Lehre der Erfindung sieht die Verwendung einer Kokerei zur Durchführung der Erfindung gemäß der ersten Lehre vor.

Näher erläutert wird die Erfindung anhand der folgenden Ausführungsbeispiele in Verbindung mit der Zeichnung.

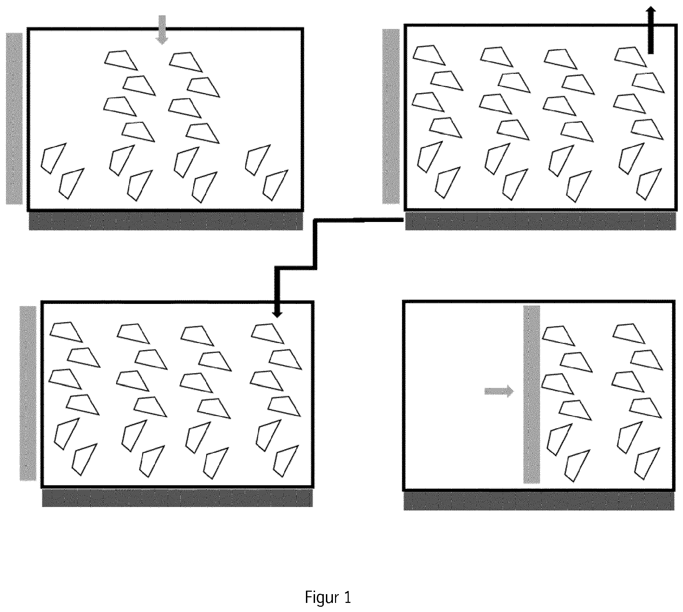

**Figur 1** zeigt anhand einer schematischen Darstellung eine Abfolge zur Durchführung eines Verfahrens zur CO₂-Abtrennung aus Prozessgasen. Dabei kann bevorzugt eine ehemalige Kokerei zweckentfremdet werden, mithin ein Retrofit einer (ehemaligen) Kokerei umgesetzt werden. Der Aufbau einer Kokerei ist Stand der Technik und umfasst mithin mehrere Ofenkammern, welche diskontinuierlich im Einsatz sind. Statt Kohle wird beispielhaft Kalkstein (CaCO₃) in die Ofenkammern gefüllt, exemplarisch in der Abbildung in Fig. 1 links oben dargestellt. Wärme wird zugeführt, beispielhaft durch Unterfeuerung der Ofenkammer(n), so dass sich CaCO₃ zu CaO zersetzt und CO₂ freigesetzt wird, mithin ein Schritt des Kalzinierens durchgeführt wird. Die dem CaCO₃ zugeführte Wärme wird aus einer Verbrennung eines Brenngases mit einem sauerstoffhaltigen Gas, bevorzugt Luft, erzeugt, wobei das Brenngas, vorzugsweise ein Kuppelgas, aus einem integrierten Hüttenwerk entstammen kann, wie zum Beispiel ein Konvertergas, Hochofengas, Elektroofengas oder dergleichen. Dabei wird der Kalkstein auf eine zwischen 900 bis 1600 °C betragende Temperatur erhitzt respektive kalziniert. Das dabei freigesetzte CO₂ wird aus der mindestens einen Ofenkammer abgeführt und kann für CCU/S verwendet werden, exemplarisch in der Abbildung in Fig. 1 rechts oben dargestellt.

Ist der vorhandene Kalkstein kalziniert, somit wenn Branntkalk (CaO) vorliegt, wird der Prozess gestoppt. Die damit verbundene Verbrennung zur Erzeugung von Wärme für CaCO3 kann mithin für eine Dauer zwischen 2 und 120 min durchgeführt werden. Anschließend wird ein CO₂-enthaltendes Prozessgas in die mindestens eine Ofenkammer zugeführt, welches bevorzugt in der beispielhaften Unterfeuerung einer anderen Ofenkammer (gerade) verbrannt wird, exemplarisch in der Abbildung in Fig. 1 links unten dargestellt. Das CO₂-enthaltende Prozessgas trifft auf den Branntkalk und karbonatisiert diesen, das heißt, dass der CO₂-Anteil im Prozessgas zumindest teilweise, vorzugsweise im Wesentlichen vollständig mit CaO zu CaCO₃ reagiert, was somit einem Schritt des Karbonatisierens entspricht. Das Prozessgas mit einem Anteil von maximal 10 Vol.-% CO₂ oder weniger, bevorzugt CO₂-frei, wird aus der mindestens einen Ofenkammer abgeführt. Dieses kann entweder in die Atmosphäre im Wesentlichen schadstofffrei entlassen werden oder es kann noch anderweitig verwendet werden, insbesondere wenn das CO₂-enthaltende Prozessgas chemisch/thermisch verwertbare Anteile an CO und/oder H₂ in Summe von mindestens 20 Vol.-% aufweist. Ist der Branntkalk zu Kalkstein karbonatisiert, wird kein weiteres CO₂-enthaltendes Prozessgas mehr zugeführt und der Prozess gestoppt.

Das in der mindestens einen Ofenkammer verbleibende CaO wird erneut mit einem CO₂-enthaltenden Prozessgas zur CO₂-Abtrennung beaufschlagt, so dass wieder der Schritt der Kalzinierung mit der beispielhaften Unterfeuerung der Ofenkammer stattfindet. Mithin werden die Schritte in der exemplarischen Abbildung der Fig. 1 rechts oben und links unten mehrmals durchgeführt, insbesondere mindestens 10 Mal. Somit kann eine mehrere Ofenkammern aufweisende Kokerei derart getaktet sein, dass im Wesentlichen zeitgleich ein Kalzinieren in zumindest der Hälfte oder auch weniger als die Hälfte der bestehenden Ofenkammern und ein Karbonatisieren in den anderen, insbesondere verbleibenden Ofenkammern stattfindet.

Mit zunehmenden Zyklen, das heißt, 10 Mal und mehr wird der Kalkstein pulverförmig und verliert an Reaktivität. Der Kalkstein oder auch der Branntkalk kann, insbesondere nach Abreaktion, durch eine Ausdrückmaschine der Kokerei herausgedrückt werden, exemplarisch in der Abbildung der Fig. 1 rechts unten dargestellt, und anschließend mit Kalkstein neu befüllt werden.

Der herausgedrückte Kalkstein oder Branntkalk eignet sich hervorragend als Einsatzstoff in Sinteranlagen, Hochöfen, Elektroöfen und/oder Konvertern.

Ein Retrofit einer bestehenden respektive ehemaligen Kokerei kann derart umgesetzt werden, dass vorherige Kohleeinlässe als Kalksteineinlässe verwendet werden, wobei ein Einlass für die Prozessgasgaszufuhr umgerüstet werden kann. Um eine Verweilzeit des Prozessgases respektive auch für die Dauer der Verbrennung in einer Ofenkammer sicherzustellen, kann dies beispielsweise über einen Gegendruck am vorhandenen Gasauslass eingestellt werden. Bei dem Karbonatisieren ist ein Überdruck vorteilhaft, beispielsweise > 2 bar. Hier kann der Druck auf beispielsweise 4 bis 6 bar in der Ofenkammer eingestellt werden, um die CO₂ Bindung zu maximieren. Bei dem umgekehrten Kalzinieren hingegen, kann der Gegendruck beispielsweise > 1,1 bis zu 3 bar eingestellt werden. Dies kann beispielsweise über ein mit Wasser gesteuertes Regelventil erfolgen. Ein dafür in Frage kommendes Regelventil wird von der Fa. thyssenkrupp Industrial Solutions unter der Bezeichnung PROven^{®} (pressure regulated oven) angeboten.

Selbstverständlich ist das Verfahren auch mit MgCO₃/MgO, oder einer Mischung MgCO₃/MgO CaCO₃/CaO durchführbar.

Kalkstein kann bevorzugt bei einer Temperatur zwischen 1000 bis 1300 °C, besonders bevorzugt zwischen 1100 und 1270 °C erhitzt respektive kalziniert werden. Dolomit/Magnesit kann bevorzugt bei einer Temperatur zwischen 700 bis 1100 °C, besonders bevorzugt zwischen 750 und 1000 °C erhitzt respektive kalziniert werden.

## Patentansprüche

1. Verfahren zur CO₂-Abtrennung aus einem CO₂-enthaltenden Prozessgas, wobei das CO₂-enthaltende Prozessgas mindestens einer Ofenkammer enthaltend MO zugeführt wird, in welcher der CO₂-Anteil im Prozessgas zumindest teilweise mit MO zu MCO₃ reagiert, somit ein Schritt des Karbonatisierens durchgeführt wird, so dass das Prozessgas mit einem Anteil von maximal 10 Vol.-% CO₂ aus der mindestens einen Ofenkammer abgeführt werden kann, **dadurch gekennzeichnet, dass** nach dem Abführen des Prozessgases aus der mindestens einen Ofenkammer dem MCO₃ Wärme zugeführt wird, so dass sich MCO₃ zu MO zersetzt und CO₂ freigesetzt wird, somit ein Schritt des Kalzinierens durchgeführt wird, wobei das CO₂ aus der mindestens einen Ofenkammer abgeführt werden kann, wobei das in der mindestens einen Ofenkammer verbleibende MO erneut mit einem CO₂-enthaltenden Prozessgas zur CO₂-Abtrennung beaufschlagt werden kann.

2. Verfahren nach Anspruch 1, wobei die dem MCO₃ zugeführte Wärme aus einer Verbrennung eines Brenngases mit einem sauerstoffhaltigen Gas erzeugt wird, wobei das während der Verbrennung entstehende Verbrennungsgas als CO₂-enthaltendes Prozessgas verwendet wird.

3. Verfahren nach Anspruch 2, wobei als Brenngas ein Kuppelgas verwendet wird.

4. Verfahren nach einem der vorgenannten Ansprüche, wobei die Verbrennung zur Erzeugung von Wärme für MCO₃ für eine Dauer zwischen 2 und 120 min durchgeführt wird.

5. Verfahren nach einem der vorgenannten Ansprüche, wobei die Verbrennung mit einer Luftzahl zwischen 0,98 und 1,02 durchgeführt wird.

6. Verfahren nach einem der vorgenannten Ansprüche, wobei das CO₂-enthaltende Prozessgas in der Ofenkammer auf eine Temperatur zwischen 400 und 900 °C eingestellt wird.

7. Verfahren nach einem der vorgenannten Ansprüche, wobei Wasserdampf gesondert in die Ofenkammer oder zusammen als Mischung mit dem CO2-enthaltenden Prozessgas zugegeben wird.

8. Verfahren nach einem der vorgenannten Ansprüche, wobei das Verfahren in einer Kokerei umfassend mehrere Ofenkammern durchgeführt wird.

9. Verfahren nach Anspruch 8, wobei ein alternierendes System enthaltend gleichzeitig die Schritte des Kalzinierens sowie des Karbonisierens bereitsteht.

10. Verfahren nach Anspruch 9, wobei ein alternierendes System enthaltend gleichzeitig die Schritte des Kalzinierens sowie des Karbonisierens bereitsteht.

11. Verfahren nach einem der vorgenannten Ansprüche, wobei die Schritte des Kalzinierens sowie des Karbonatisierens in mindestens einer Ofenkammer mindestens 10 Mal durchgeführt werden.

12. Verwendung einer Kokerei zur Durchführung der vorgenannten Ansprüche.
